# FASCICULE DE BREVET EUROPEEN

(11) **EP 1 681 967 B1**
(45) Date de publication et mention de la délivrance du brevet: **03.10.2007**
(21) Numéro de dépôt: 04805403.5
(22) Date de dépôt: 05.11.2004
(51) Int. Cl.: A47J 27/04, F22B 1/28

(54) **PROCEDE ET FOUR DE CUISSON A LA VAPEUR AYANT UNE ALIMENTATION EN EAU PERFECTIONNEE**
VERFAHREN UND DAMPFGARGERÄT MIT EINER VERBESSERTEN VORRICHTUNG ZUR WASSERZUFÜHRUNG
STEAM COOKING METHOD AND OVEN WITH AN IMPROVED WATER SUPPLY

(30) Priorité: 06.11.2003 FR 0313070
(43) Date de publication de la demande: 26.07.2006
(73) Titulaire: Brandt Industries, 92500 Rueil Malmaison (FR)
(72) Inventeur: BARATIN, Nicole, F-45470 Loury (FR); VINCENT, Olivier, F-45190 Beaugency (FR); GENEVIER, Sébastien, F-45000 Orléans (FR)
(74) Mandataire: Stankoff, Hélène
(86) Numéro de dépôt international: PCT/FR2004/002855
(87) Numéro de publication internationale: WO 2005/046407

(56) Documents cités:
- EP-A- 0 673 615
- DE-A- 19 602 424
- FR-A- 2 583 141
- US-A1- 2003 178 411

## Description

L'invention concerne de manière générale le domaine de la cuisson à la vapeur. Plus particulièrement, l'invention concerne un procédé et un four de cuisson à la vapeur, ainsi qu'un générateur de vapeur, dans lesquels est effectuée une détection d'épuisement d'eau de façon à commander une alimentation en eau.

Dans un four de cuisson à la vapeur, la régulation de l'alimentation en eau du générateur de vapeur intégré dans le four présente certains avantages.

La régulation de l'alimentation en eau autorise la fourniture d'une quantité d'eau qui peut être dosée. Il est ainsi possible d'éviter que la quantité d'eau contenue dans un élément d'évaporation par chauffage du générateur ne soit trop importante.

La détection de l'instant où une alimentation en eau de l'élément d'évaporation doit être déclenchée pose un problème technique particulier, car cette détection doit être faite de manière simple, fiable et à un coût adapté à des produits de grande consommation.

Il est connu par EP-0673615-B1 un appareil de cuisson à la vapeur dans lequel l'alimentation en eau est commandée à partir d'une mesure de température à l'intérieur d'une enceinte de cuisson de l'appareil.

L'épuisement de l'eau dans l'appareil produit une diminution de la quantité de vapeur dans l'enceinte. La diminution de la quantité de vapeur conduit à une baisse de la température qui est détectée par un capteur de température présent dans l'enceinte. La détection de la baisse de température dans l'enceinte est utilisée pour commander une alimentation en eau.

La solution proposée par EP-0673615-B1, bien que simple et économique, ne donne cependant pas entière satisfaction en ce qui concerne le temps de détection et l'indépendance de la détection relativement à des événements autres que celui de l'épuisement d'eau.

Dans l'appareil selon EP-0673615-B1, le temps de mesure est relativement long, car il est lié à la constante thermique de l'enceinte, qui peut être élevée, et à la nécessité d'avoir une baisse significative de la température pour que la détection soit fiable. Concernant l'indépendance de la détection, une baisse de la température dans l'enceinte peut être provoquée par un événement autre que l'événement « épuisement d'eau », par exemple, par une ouverture intempestive de la porte de l'enceinte par l'utilisateur. Des moyens supplémentaires, incluant une logique de discrimination, doivent donc être prévus pour éviter un éventuel déclenchement d'une alimentation en eau lors d'une ouverture de la porte.

Il est donc souhaitable de fournir un procédé de cuisson à la vapeur garantissant une meilleure détection d'un épuisement d'eau dans le générateur de vapeur, et cela avec des moyens techniques simples et peu coûteux.

Le procédé de cuisson à la vapeur selon l'invention est mis en oeuvre dans un four de cuisson équipé d'un générateur de vapeur, le générateur de vapeur ayant une cuvette d'évaporation d'eau et un bloc chauffant en contact thermique avec la cuvette d'évaporation d'eau. Le procédé comprend une phase de cuisson pendant laquelle est effectuée une régulation d'une alimentation en eau de la cuvette d'évaporation d'eau, et est caractérisé en ce que la régulation d'alimentation en eau comprend les étapes consistant à:
détecter une hausse d'une température dans le bloc chauffant, et
déclencher une alimentation en eau de la cuvette d'évaporation d'eau lorsque ladite hausse est détectée.

Selon une autre caractéristique, dans l'étape de détection de hausse de température, afin de déclencher l'alimentation en eau, il est détecté une hausse de température correspondant à une évaporation d'une quantité d'eau prédéterminée contenue dans la cuvette d'évaporation d'eau.

Il est ainsi possible d'assurer une détection rapide et indépendante d'un épuisement d'eau dans la cuvette d'évaporation.

Afin de démarrer une génération de vapeur dès la mise sous tension du générateur de vapeur, le procédé selon l'invention peut comprendre également une étape consistant à effectuer une première alimentation en eau de la cuvette d'évaporation d'eau au début de la phase de cuisson.

Selon une autre caractéristique préférée, la hausse de température est détectée lorsque la température dans le bloc chauffant dépasse une première température de seuil prédéterminée.

Plus précisément, la première température de seuil est de préférence sensiblement supérieure à une température de stabilisation dans le bloc chauffant. La température de stabilisation est atteinte lorsque la cuvette d'évaporation d'eau contient de l'eau et que le bloc chauffant chauffe effectivement la cuvette d'évaporation d'eau.

Par exemple, dans un mode de réalisation préféré, la première température de seuil est comprise entre 110°C et 130°C environ et la température de stabilisation est comprise entre 100°C et 120°C environ.

Afin d'avoir une détection sûre, le procédé selon l'invention prévoit de préférence un écart de température relativement élevé entre la température de stabilisation et la première température de seuil.

Selon une autre caractéristique, l'alimentation en eau est effectuée de préférence par gravité, en ouvrant un circuit d'alimentation en eau pendant une durée prédéterminée.

Selon encore une autre caractéristique du procédé selon l'invention, il est possible de décider une désactivation de sécurité du bloc chauffant sur la base d'un dépassement de la première température de seuil et/ou d'un dépassement d'une température de seuil de sécurité dans le bloc chauffant. Une double sécurité est ainsi assurée pour éviter un suréchauffement du bloc chauffant.

De manière avantageuse, le procédé selon l'invention comprend de préférence, dans une phase d'évacuation de vapeur, une étape consistant à maintenir un chauffage de la cuvette d'évaporation d'eau jusqu'à la détection: d'une hausse de température indiquant qu'une quantité d'eau restante dans la cuvette d'évaporation d'eau est totalement évaporée. L'eau restant en fin de cuisson dans le générateur de vapeur est ainsi éliminée.

La présente invention a également pour objet de fournir un générateur de vapeur dans lequel les inconvénients de la technique antérieure mentionnés ci-dessous sont résolus.

Le générateur de vapeur selon l'invention, notamment pour four de cuisson, comprend une cuvette d'évaporation d'eau, un bloc chauffant en contact thermique avec la cuvette d'évaporation d'eau et des moyens pour réguler une alimentation en eau de la coupelle d'évaporation d'eau, et est caractérisé en ce que les moyens de régulation d'alimentation en eau comprennent des moyens pour détecter une hausse d'une température dans le bloc chauffant, et des moyens pour commander une alimentation en eau de la cuvette d'évaporation d'eau lorsque la hausse est détectée.

De préférence, les moyens de détection de hausse de température comprennent des moyens pour indiquer un dépassement d'une première température de seuil dans le bloc chauffant.

Selon une autre caractéristique, le générateur de vapeur selon l'invention comprend également des moyens pour indiquer un dépassement d'une seconde température de seuil dans le bloc chauffant.

De manière avantageuse, les moyens d'indication de dépassement d'une première température de seuil et les moyens d'indication de dépassement d'une seconde température de seuil comprennent respectivement un capteur de température et un limiteur de température.

Dans le générateur de vapeur selon l'invention, le capteur de température est particulièrement dédié à la détection d'un épuisement d'eau, mais il peut également être employé pour une désactivation de sécurité du bloc chauffant. Le limiteur de température est particulièrement dédié à la désactivation de sécurité du bloc chauffant.

De préférence, les moyens de commande d'alimentation en eau comprennent un circuit de commande et une électrovanne. Le circuit de commande commande une ouverture de l'électrovanne pendant une durée prédéterminée, lorsqu'il reçoit en provenance des moyens de détection de hausse de température une information indiquant une détection de la hausse de température.

Selon une forme de réalisation particulièrement préférée du générateur de vapeur selon l'invention, la cuvette d'évaporation d'eau et le bloc chauffant sont formés en une seule pièce à partir d'un bloc de matériau ayant une bonne conductibilité thermique, la cuvette d'évaporation d'eau et le bloc chauffant étant formés respectivement dans des parties supérieure et inférieure du bloc de matériau.

Dans la forme de réalisation ci-dessus, le bloc chauffant est équipé de préférence d'une résistance chauffante montée par sertissage sur la partie inférieure du bloc de matériau. Avantageusement, le capteur de température et le limiteur de température sont également montés sur la partie inférieure du bloc de matériau, en contact thermique avec le bloc de matériau.

Le bloc de matériau est par exemple un bloc d'aluminium.

Un autre objet de la présente invention est de fournir un four de cuisson à la vapeur pour la mise en oeuvre du procédé de cuisson à la vapeur selon l'invention.

Encore un autre objet de la présente invention est de fournir un four de cuisson à la vapeur dans lequel est intégré un générateur de vapeur selon l'invention.

Selon une forme de réalisation préférée, le four de cuisson à la vapeur selon l'invention comprend une sonde de température pour mesurer une température d'enceinte à l'intérieur d'une enceinte du four, et un circuit de commande pour réguler la température d'enceinte en commandant le bloc chauffant en fonction d'une information fournie par la sonde de température et d'une température de consigne.

La régulation de la température à l'intérieur de l'enceinte de cuisson du four autorise une cuisson de meilleure qualité.

D'autres caractéristiques et avantages de la présente invention apparaîtront à la lecture de la description suivante de plusieurs modes et formes de réalisation préférés du procédé, du générateur de vapeur et du four de cuisson à la vapeur selon l'invention, en liaison aux dessins annexés, dans lesquels :
la Fig.1 montre, de manière simplifiée, une forme de réalisation préférée du four de cuisson à la vapeur selon l'invention ; et
la Fig.2 montre deux courbes d'évolution de la température dans une enceinte de cuisson et dans un bloc chauffant du four de la Fig.1, respectivement.

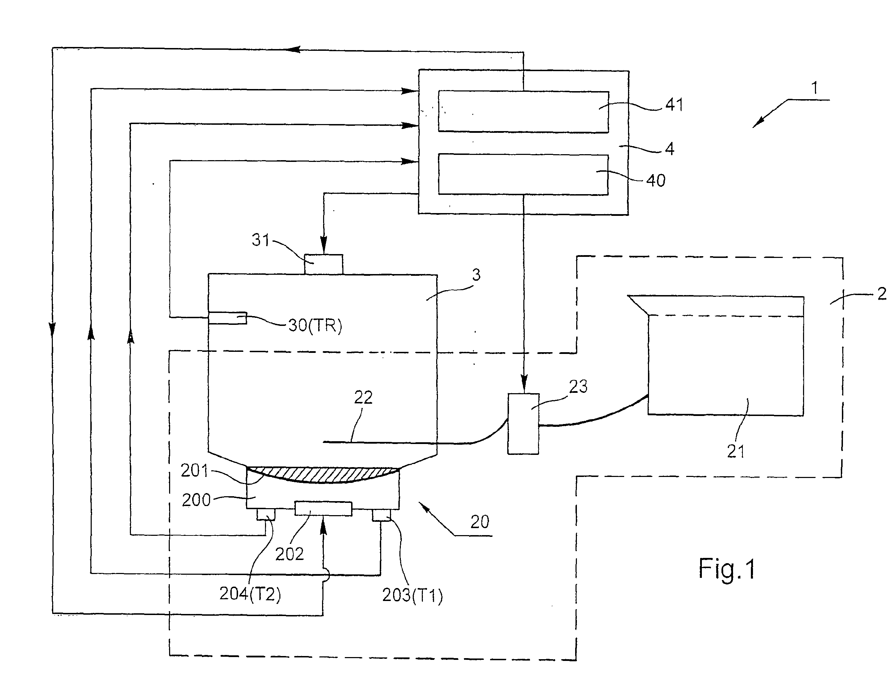

En référence à la Fig.1, un four de cuisson à la vapeur 1 selon la présente invention comprend essentiellement un générateur de vapeur 2, une enceinte de cuisson 3 et un circuit de commande de four 4.

Le générateur de vapeur 2 comporte essentiellement un bloc de génération de vapeur 20, un dispositif d'alimentation en eau comprenant des éléments 21, 22 et 23, et un circuit de commande d'alimentation en eau 40 inclus dans le circuit 4.

Le bloc de génération de vapeur 20 est réalisé à partir de matériaux assurant une bonne conductibilité thermique, par exemple, l'aluminium.

Dans cette forme de réalisation préférée, le bloc de génération de vapeur 20 comprend, en une seule pièce en aluminium, une partie supérieure formant une cuvette d'évaporation d'eau 201 et une partie inférieure formant un bloc chauffant 200.

En variante, la cuvette d'évaporation d'eau 201 et le bloc chauffant 200 peuvent être réalisés sous la forme de deux pièces distinctes assemblées l'une à l'autre.

Le bloc chauffant 200 est équipé d'une résistance chauffante 202, d'un capteur de température 203 et d'un limiteur de température 204. Ces éléments 202, 203 et 204 peuvent être montés à différents emplacements dans le bloc chauffant 200.

De préférence, la résistance chauffante 202 est sertie sur le bloc chauffant 200 de manière à obtenir un contact thermique de bonne qualité.

Le capteur de température 203, en association avec un circuit électronique à seuil (non représenté) inclus par exemple dans le circuit de commande de four 4, a pour fonction d'indiquer un dépassement d'une première température de seuil T1 dans le bloc chauffant 200. Le limiteur 204 a pour fonction d'indiquer un dépassement d'une seconde température de seuil T2 dans le bloc chauffant 200. Le limiteur 204 est ici un limiteur de température de type interrupteur, ayant un état fermé et un état ouvert, par exemple, un interrupteur de type bilame. Lorsque la température de seuil de sécurité T2 est dépassée dans le bloc chauffant 200, le limiteur 204 change d'état en commutant par exemple à l'état ouvert. La température T2 est une température de seuil de sécurité supérieure à la température T1.

Dans cette forme de réalisation préférée, la température de seuil T1 est typiquement de 120°C. De manière plus générale, dans d'autres formes de réalisation, la température de seuil T1 peut être comprise entre 110°C et 130°C environ.

Conformément à l'invention, la température de seuil T1 est utilisée pour commander l'alimentation en eau du générateur de vapeur 2. Cet aspect de l'invention est décrit dans la suite de manière plus détaillée.

En variante, un capteur de température, en association avec un circuit électronique à seuil, peut également être utilisé pour le limiteur 204.

Le dispositif d'alimentation en eau est de type à alimentation par gravité et comprend, comme indiqué ci-dessus, les éléments 21, 22 et 23.

L'élément 21 est un réservoir d'eau, l'élément 22 est une pipette d'alimentation en eau, et l'élément 23 est une électrovanne.

La pipette d'alimentation en eau 22 comprend une première extrémité qui est localisée au niveau du centre de la cuvette 201. Une seconde extrémité de la pipette d'alimentation en eau 22 est raccordée au réservoir 21 à travers l'électrovanne 23 et un tuyau de raccordement, afin de former un circuit d'alimentation en eau.

Dans le four 1, le réservoir 21 est disposé de telle manière que le niveau d'eau du réservoir 21 est plus élevé que celui de la pipette d'alimentation en eau 22. Une circulation de l'eau par gravité entre le réservoir 21 et la cuvette 201 est ainsi obtenue.

La circulation de l'eau entre le réservoir 21 et la cuvette 201, à travers la pipette 22, est commandée par l'électrovanne 23. L'électrovanne 23 est actionnée par le circuit de commande d'alimentation en eau 40.

Comme montré à la Fig.1, le circuit de commande d'alimentation en eau 40 est de préférence intégré dans le circuit de commande de four 4.

Le circuit de commande d'alimentation en eau 40 actionne l'électrovanne 23 en fonction notamment de l'information délivrée par le capteur 203. Un signal de commande d'ouverture/fermeture est fourni à cette fin à l'électrovanne 23 par le circuit de commande d'alimentation en eau 40.

L'enceinte de cuisson 3 est équipée notamment d'une sonde de température 30 et d'un activateur thermique 31. De préférence, l'enceinte de cuisson 3 est également équipée d'une nappe chauffante et d'une turbine de ventilation/refroidissement (non représentées).

La sonde de température 30 fournit au circuit de commande de four 4 une mesure d'une température TR à l'intérieur de l'enceinte de cuisson 3.

De manière classique, l'activateur thermique 31 est alimenté par le circuit de commande de four 4 et actionne en ouverture/fermeture un clapet d'évacuation de vapeur (non représenté).

Le circuit de commande de four 4 est par exemple construit autour d'un micro-contrôleur ou d'un microprocesseur. Outre le circuit de commande d'alimentation en eau 40, le circuit de commande de four 4 comprend notamment un circuit de commande de résistance chauffante 41 et différents circuits logiques de commande et de sécurité (non représentés).

Le circuit de commande de résistance chauffante 41 réalise une boucle de régulation de la température TR à l'intérieur de l'enceinte 3.

Selon cette forme de réalisation préférée, la température TR à l'intérieur de l'enceinte 3 est régulée à une température de consigne TC d'environ 100°C.

De préférence, la régulation de la température TR est de type tout-ou-rien. Une sortie de puissance du circuit de commande de résistance chauffante 41 est reliée à la résistance chauffante 202 et est active lorsque la température TR est inférieure à la température de consigne TC. L'alimentation de la résistance chauffante 202 est coupée lorsque la température TR devient supérieure à la température de consigne TC.

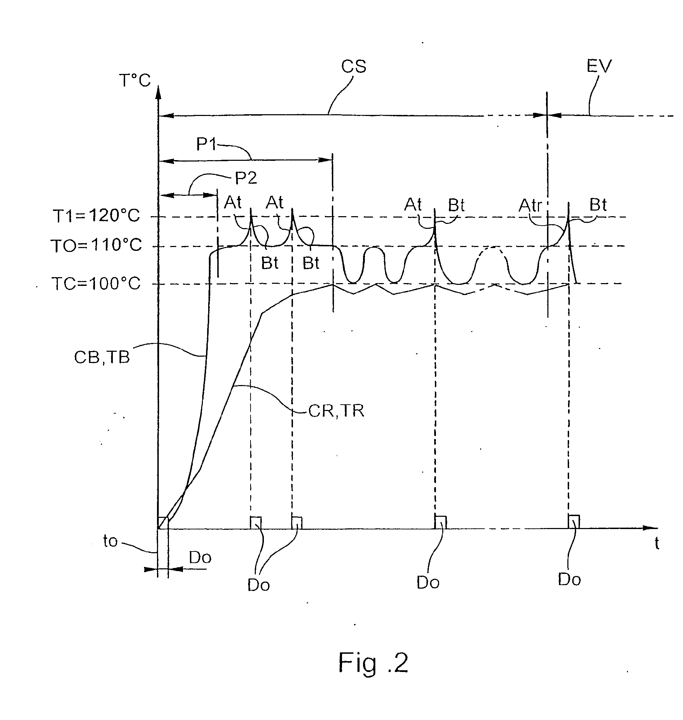

Le fonctionnement du circuit de commande de four 4, et plus particulièrement celui du circuit de commande d'alimentation en eau 40, sont maintenant décrits avec plus de détails en référence également à la Fig.2.

A la Fig.2, une courbe CR montre une évolution de la température TR à l'intérieur de l'enceinte 3 et une courbe CB montre une évolution d'une température TB au niveau du capteur 203 dans le bloc chauffant 200.

Les courbes CR et CB sont montrées pendant une phase de cuisson CS et une phase d'évaporation de vapeur EV d'un cycle de fonctionnement du four 1.

La phase de cuisson CS comprend une période de montée en température P1 de l'enceinte 3.

A un temps t0 correspondant au début de la phase de cuisson CS, le circuit de commande d'alimentation en eau 40 commande une ouverture de l'électrovanne 23 pendant une durée D0. La durée D0 est déterminée de manière à assurer un remplissage approprié de la cuvette 201. De plus, au temps t0, la résistance chauffante 202 est mise sous tension par le circuit de commande de résistance chauffante 41.

Comme cela apparaît dans la courbe CR, la température TR à l'intérieur de l'enceinte 3 atteint la température de consigne TC = 100°C au terme de la période de montée en température P1. La très bonne conductibilité thermique du matériau constituant le bloc de génération de vapeur 20, ainsi que le sertissage de la résistance chauffante 202 dans le bloc chauffant 200, autorisent une montée en température rapide. La température TR se stabilise ensuite à une valeur moyenne de 98°C environ, du fait de la régulation effectuée par le circuit 41.

Dans la courbe CB, une période de montée en température P2 du bloc chauffant 200 commence au temps t0 et s'achève lorsque la température TB atteint une température de stabilisation T0 égale à 110°C environ dans cette forme de réalisation préférée. De manière plus générale, dans d'autres formes de réalisation, la température de stabilisation T0 peut prendre une valeur comprise entre 100°C et 120°C environ. La température TB se stabilise effectivement à T0 lorsque la résistance chauffante 202 est sous tension et que la cuvette 201 contient de l'eau.

Après la mise sous tension de la résistance chauffante 202 au temps t0, l'enceinte se sature rapidement en vapeur du fait de l'évaporation de l'eau contenue dans la cuvette 201.

Pour un fonctionnement correct du générateur de vapeur 2, la cuvette d'évaporation d'eau 201 doit de préférence contenir de l'eau en permanence. Il est donc nécessaire de détecter un épuisement d'une quantité d'eau prédéterminée dans la cuvette 201 afin de commander une ouverture de l'électrovanne 23.

Conformément à l'invention, l'apparition dans la courbe CB d'une hausse rapide At de la température TB lors d'un épuisement d'eau dans la cuvette 201 est utilisée pour déclencher une alimentation en eau de la cuvette 201.

La hausse de température At est détectée par le capteur 203 lorsque la température TB dépasse la température de seuil T1 = 120°C correspondant au capteur 203. Consécutivement à cette détection, le circuit de commande d'alimentation en eau 40 actionne en ouverture l'électrovanne 23 pendant la durée D0, ou une durée différente éventuellement plus adaptée, de manière à remplir la cuvette 201.

L'alimentation en eau de la cuvette 201 provoque une baisse Bt de la température TB vers la température de stabilisation T0 lorsque la résistance chauffante 202 est sous tension. Lorsque l'alimentation en tension de la résistance chauffante 201 est coupée par le circuit 41, du fait par exemple de la régulation en tout-ou-rien de la température TR, la température TB à tendance à chuter vers la température de l'enceinte (TC = 100°C).

On notera qu'un dépassement persistant de T1 = 120° par la température TB, après une commande de l'électrovanne 23, est une information d'anomalie qui peut être exploitée par le circuit de commande de four 4. Ainsi, cette information d'anomalie peut être utilisée par le circuit de commande de résistance chauffante 41 pour une désactivation de sécurité, en coupant l'alimentation de la résistance chauffante 202.

Une sécurité supplémentaire est apportée par le limiteur 204 qui informe le circuit de commande de résistance chauffante 41 d'un dépassement d'une température limite de sécurité égale à T2.

Pendant toute la phase de cuisson CS, la régulation de l'alimentation en eau du générateur de vapeur 2 est effectuée de la manière qui vient d'être décrite ci-dessus.

La phase d'évacuation de vapeur EV a typiquement une durée de trois minutes et démarre à la fin de la phase de cuisson CS.

La phase d'évacuation de vapeur EV permet, avant l'ouverture d'une porte de l'enceinte 3, une évacuation de la vapeur et un séchage des parois de l'enceinte 3.

Pendant la phase EV, la nappe chauffante et la turbine de ventilation / refroidissement (non représentées) sont maintenues sous tension par le circuit de commande de four 4. Par contre, l'activateur thermique 31 autorisant l'ouverture d'un clapet de l'enceinte 3 est mis hors tension par le circuit de commande de four 4.

Conformément à l'invention, il est possible pendant la phase EV d'assurer une évacuation totale par évaporation d'une quantité d'eau restante dans la cuvette 201 à la fin de la phase de cuisson CS.

Afin d'évacuer par évaporation la quantité d'eau restante, la résistance chauffante 202 est maintenue sous tension pendant la phase EV jusqu'à la détection d'une hausse Atr de la température TB. La hausse de température Atr est détectée par le capteur 203 de la même manière qu'une hausse de température At pendant la phase de cuisson CS.

La détection de la hausse de température Atr informe le circuit de commande de four 4 de l'évaporation totale de la quantité d'eau restante. Lorsque Atr est détectée, le circuit de commande de résistance chauffante 41 commande la mise hors tension de la résistance chauffante 202.

De préférence, une phase de séchage (non représentée), ayant typiquement une durée de trois minutes, suit la phase d'évacuation de vapeur EV et démarre après l'ouverture de la porte de l'enceinte 3. Il est ainsi possible de sécher parfaitement les parois de l'enceinte 3.

## Revendications

1. Procédé de cuisson à la vapeur dans un four de cuisson (1) équipé d'un générateur de vapeur (2, 4), ledit générateur de vapeur (2, 4) ayant une cuvette d'évaporation d'eau (201) et un bloc chauffant (200) en contact thermique avec ladite cuvette d'évaporation d'eau (201), comprenant une phase de cuisson (CS) pendant laquelle est effectuée une régulation d'une alimentation en eau de ladite cuvette d'évaporation d'eau (201), **caractérisé en ce que** ladite régulation d'alimentation en eau comprend les étapes consistant à:
détecter une hausse (At) d'une température (TB) dans ledit bloc chauffant (200), et
déclencher une alimentation en eau de ladite cuvette d'évaporation d'eau (201) lorsque ladite hausse (At) est détectée.

2. Procédé de cuisson à la vapeur selon la revendication 1, **caractérisé en ce que** dans ladite étape de détection de hausse de température, afin de déclencher ladite alimentation en eau, il est détecté une hausse de température (At) correspondant à une évaporation d'une quantité d'eau prédéterminée contenue dans la cuvette d'évaporation d'eau (201).

3. Procédé de cuisson à la vapeur selon la revendication 1 ou 2, **caractérisé en ce qu'**il comprend également une étape consistant à :
effectuer une première alimentation en eau de ladite cuvette d'évaporation d'eau (201) au début (t0) de ladite phase de cuisson (CS).

4. Procédé de cuisson à la vapeur selon l'une quelconque des revendications 1 à 3, **caractérisé en ce que** ladite hausse (At) est détectée lorsque ladite température (TB) dépasse une première température de seuil prédéterminée (T1).

5. Procédé de cuisson à la vapeur selon la revendication 4, **caractérisé en ce que** ladite première température de seuil (T1) est sensiblement supérieure à une température de stabilisation (T0) dans ledit bloc chauffant (200) atteinte lorsque ladite cuvette d'évaporation d'eau (201) contient de l'eau et que ledit bloc chauffant (200) chauffe effectivement ladite cuvette d'évaporation d'eau (201).

6. Procédé de cuisson à la vapeur selon la revendication 5, **caractérisé en ce que** ladite première température de seuil (T1) est comprise entre 110°C et 130°C environ et/ou ladite température de stabilisation (T0) est comprise entre 100°C et 120°C environ.

7. Procédé de cuisson à la vapeur selon l'une quelconque des revendications 4 à 6, **caractérisé en ce qu'**une désactivation de sécurité dudit bloc chauffant (200) est décidée sur la base d'un dépassement de ladite première température de seuil (T1) et/ou d'un dépassement d'une température de seuil de sécurité (T2) dans ledit bloc chauffant (200).

8. Procédé de cuisson à la vapeur selon l'une quelconque des revendications 1 à 7, **caractérisé en ce qu'**une dite alimentation en eau est effectuée en ouvrant un circuit d'alimentation en eau (21, 22, 23) pendant une durée prédéterminée (D0).

9. Procédé de cuisson à la vapeur selon l'une quelconque des revendications 1 à 8, **caractérisé en ce qu'**une dite alimentation en eau est effectuée par gravité.

10. Procédé de cuisson à la vapeur selon l'une quelconque des revendications 1 à 9, **caractérisé en ce qu'**il comprend également, dans une phase d'évacuation de vapeur (EV), une étape consistant à :
maintenir un chauffage de ladite cuvette d'évaporation d'eau (201) jusqu'à la détection d'une dite hausse (Atr) indiquant qu'une quantité d'eau restante dans ladite cuvette d'évaporation d'eau (201) est totalement évaporée.

11. Générateur de vapeur notamment pour four de cuisson, comprenant une cuvette d'évaporation d'eau (201), un bloc chauffant (200) en contact thermique avec ladite cuvette d'évaporation d'eau (201) et des moyens pour réguler une alimentation en eau de ladite coupelle d'évaporation d'eau (201), **caractérisé en ce que** lesdits moyens de régulation d'alimentation en eau comprennent :
des moyens pour détecter (203) une hausse (At) d'une température (TB) dans ledit bloc chauffant (200), et
des moyens pour commander (40, 23) une alimentation en eau de ladite cuvette d'évaporation d'eau (201) lorsque ladite hausse (At) est détectée.

12. Générateur de vapeur selon la revendication 11, **caractérisé en ce que** lesdits moyens de détection de hausse de température comprennent des moyens (203) pour indiquer un dépassement d'une première température de seuil (T1) dans ledit bloc chauffant (200).

13. Générateur de vapeur selon la revendication 11 ou 12, **caractérisé en ce qu'**il comprend également des moyens (204) pour indiquer un dépassement d'une seconde température de seuil (T2) dans ledit bloc chauffant (200).

14. Générateur de vapeur selon les revendications 12 et 13, **caractérisé en ce que** lesdits moyens d'indication de dépassement d'une première température de seuil (T1) et moyens d'indication de dépassement d'une seconde température de seuil (T2) comprennent respectivement un capteur de température (203) et un limiteur de température (204).

15. Générateur de vapeur selon l'une quelconque des revendications 11 à 14, **caractérisé en ce que** lesdits moyens de commande d'alimentation en eau comprennent un circuit de commande (40) et une électrovanne (23), ledit circuit de commande (40) commandant une ouverture de ladite électrovanne (23) pendant une durée prédéterminée (D0) lorsqu'il reçoit en provenance desdits moyens de détection de hausse de température (203) une information indiquant une détection de ladite hausse (At).

16. Générateur de vapeur selon la revendication 14, **caractérisé en ce que** ledit capteur de température (203) et ledit limiteur de température (204) sont montés sur ladite partie inférieure dudit bloc de matériau en contact thermique avec ledit bloc de matériau.

17. Four de cuisson à la vapeur, **caractérisé en ce qu'**il comprend un générateur de vapeur (2, 4) selon l'une quelconque des revendications 11 à 16.

18. Four de cuisson à la vapeur selon la revendication 17, **caractérisé en ce qu'**il comprend :
une sonde de température (30) pour mesurer une température d'enceinte (TR) à l'intérieur d'une enceinte (3) du four (1), et
un circuit de commande (4, 41) pour réguler ladite température d'enceinte (TR) en commandant ledit bloc chauffant (200) en fonction d'une information fournie par ladite sonde de température (30) et d'une température de consigne (CS).

## Claims

1. Method of cooking by steam in a cooking oven (1) equipped with a steam generator (2, 4), said steam generator (2, 4) having a water evaporation bowl (201) and a heating block (200) in thermal contact with said water evaporation bowl (201), comprising a cooking phase (CS) during which regulation of a water supply to said water evaporation bowl (201) is carried out, **characterised in that** said water supply regulation comprises the steps consisting of:
detecting a rise (At) in a temperature (TB) in said heating block (200), and
triggering a supply of water to said water evaporation bowl (201) when said rise (At) is detected.

2. Steam cooking method according to claim 1, **characterised in that**, in said step of detecting the rise in temperature, in order to trigger said supply of water, a rise in temperature (At) corresponding to an evaporation of a predetermined quantity of water contained in the water evaporation bowl (201) is detected.

3. Steam cooking method according to claim 1 or 2, **characterised in that** it also comprises a step consisting of:
providing a first supply of water to said water evaporation bowl (201) at the start (10) of said cooking phase (CS).

4. Steam cooking method according to any one of claims 1 to 3, **characterised in that** said rise (At) is detected when said temperature (TB) exceeds a first predetermined threshold temperature (T1).

5. Steam cooking method according to claim 4, **characterised in that** said first temperature threshold (T1) is substantially higher than a stabilisation temperature (T0) in said heating block (200) reached when said water evaporation bowl (201) contains water and said heating block (200) is actually heating said water evaporation bowl (201).

6. Steam cooking method according to claim 5, **characterised in that** said first threshold temperature (T1) is between approximately 110°C and 130°C and/or said stabilisation temperature (T0) is between approximately 100°C and 120°C.

7. Steam cooking method according to any one of claims 4 to 6, **characterised in that** a safety deactivation of said heating block (200) is ordered on the basis of said first temperature threshold (T1) being exceeded and/or a safety threshold temperature (T2) being exceeded in said heating block (200).

8. Steam cooking method according to any one of claims 1 to 7, **characterised in that** one of said supply of water is performed by opening a water supply circuit (21, 22, 23) for a predetermined period (D0).

9. Steam cooking method according to any one of claims 1 to 8, **characterised in that** one of said supply of water is performed by gravity.

10. Steam cooking method according to any one of claims 1 to 9, **characterised in that** it also comprises, in a steam discharge phase (EV), a step consisting of:
maintaining heating of said water evaporation bowl (201) until a said rise (Atr) is detected indicating that a quantity of water remaining in said water evaporation bowl (201) is completely evaporated.

11. Steam generator, in particular for a cooking oven, comprising a water evaporation bowl (201), a heating block (200) in thermal contact with said water evaporation bowl (201) and means for regulating a supply of water to said water evaporation bowl (201), **characterised in that** said water supply regulation means comprise :
means (203) for detecting a rise (At) in the temperature (TB) in said heating block (200), and
means (40, 23) for controlling a supply of water to said water evaporation bowl (201) when said rise (At) is detected.

12. Steam generator according to claim 11, **characterised in that** said temperature rise detection means comprise means (203) for indicating that a first threshold temperature (T1) has been exceeded in said heating block (200).

13. Steam generator according to claim 11 or 12, **characterised in that** it also comprises means (204) for indicating that a second threshold temperature (T2) has been exceeded in said heating block (200).

14. Steam generator according to claims 12 and 13, **characterised in that** said means indicating that a first threshold temperature (T1) has been exceeded and said means indicating that a second threshold temperature (T2) has been exceeded comprise respectively a temperature sensor (203) and a temperature limiter (204).

15. Steam generator according to any one of claims 11 to 14, **characterised in that** said water supply control means comprise a control circuit (40) and a solenoid valve (23), said control circuit (40) controlling an opening of said solenoid valve (23) for a predetermined period (D0) when it receives, coming from said temperature rise detection means (203), information indicating detection of said rise (At).

16. Steam generator according to claim 14, **characterised in that** said temperature sensor (203) and said temperature limiter (204) are mounted on said bottom part of said block of material in thermal contact with said block of material.

17. Steam cooking oven, **characterised in that** it comprises a steam generator (2, 4) according to any one of claims 11 to 16.

18. Steam cooking oven according to claim 17, **characterised in that** it comprises:
a temperature probe (30) for measuring a cavity temperature (TR) inside a cavity (3) of the oven (1), and
a control circuit (4, 41) for regulating said cavity temperature (TR) by controlling said heating block (200) according to information supplied by said temperature probe (30) and a set temperature (CS).

## Patentansprüche

1. Verfahren zum Dampfgaren In einem Garofen (1), welcher mit einem Dampferzeuger (2, 4) ausgestattet ist, wobei der Dampferzeuger (2, 4) eine Wasserverdampfungsschale (201) und einen Heizblock (200) aufweist, der in thermischen Kontakt mit der Wasserverdampfungsschale (201) steht, mit einer Garphase (CS), während welcher ein Regulieren der Versorgung der Wasserverdampfungsschale (201) mit Wasser erfolgt, **dadurch gekennzeichnet, dass** das Regeln der Wasserversorgung Schritte aufweist, die darin bestehen, dass
ein Anstieg (At) einer Temperatur (TB) Im Heizblock (200) erfasst wird, und
eine Versorgung der Wasserverdampfungsschale (201) mit Wasser ausgelöst wird, wenn der Anstieg (At) erfasst ist.

2. Dampfgarverfahren nach Anspruch 1, **dadurch gekennzeichnet, dass** bei dem Schritt des Erfassens eines Temperaturanstiegs, um die Wasserversorgung auszulösen, ein Temperaturanstieg (At) erfasst wird, der einer Verdampfung einer vorgegebenen Menge von in der Wasserverdampfungsschale (201) enthaltenem Wasser entspricht.

3. Dampfgarverfahren nach Anspruch 1 oder 2, **dadurch gekennzeichnet, dass** es auch einen Schritt aufweist, der darin besteht, dass
eine erste Versorgung der Wasserverdampfungsschale (201) mit Wasser am Anfang (t0) der Garphase (CS) erfolgt.

4. Dampfgarverfahren nach einem der Ansprüche 1 bis 3, **dadurch gekennzeichnet, dass** der Anstieg (At) erfasst wird, wenn die Temperatur (TB) eine erste vorgegebene Schwellentemperatur (T1) überschreitet.

5. Dampfgarverfahren nach Anspruch 4, **dadurch gekennzeichnet, dass** die erste Schwellentemperatur (T1) im Wesentlichen höher als eine Stabillsatlonstemperatur (T0) im Helzblock (200) ist, die erreicht wird, wenn die Wasserverdampfungsschale (201) Wasser enthält und der Heizblock (200) die Wasserverdampfungsschale (201) tatsächlich heizt.

6. Dampfgarverfahren nach Anspruch 5, **dadurch gekennzeichnet, dass** die erste Schwellentemperatur (T1) zwischen ca. 110°C und 130°C liegt und/oder die Stabilisationstemperatur (T0) zwischen ca. 100°C und 120°C liegt.

7. Dampfgarverfahren nach einem der Ansprüche 4 bis 6, **dadurch gekennzeichnet, dass** eine Deaktivierung der Sicherheit des Heizblocks (200) aufgrund einer Überschreitung der ersten Schwellentemperatur (T1) und/oder einer Überschreitung einer Sicherheitssehwellentemperatur (T2) im Heizblock (200) beschlossen wird.

8. Dampfgarverfahren nach einem der Ansprüche 1 bis 7, **dadurch gekennzeichnet, dass** die Wasserversorgung erfolgt, indem ein Wasserversorgungskreis (21, 22, 23) während einer vorgegebenen Zeit (D0) geöffnet wird.

9. Dampfgarverfahren nach einem der Ansprüche 1 bis 8, **dadurch gekennzeichnet, dass** eine Wasserversorgung durch Schwerkraft erfolgt.

10. Dampfgarverfahren nach einem der Ansprüche 1 bis 9, **dadurch gekennzeichnet, dass** es zudem bei einer Wasserentleerungsphase (EV) einen Schritt aufweist, der darin besteht, dass
ein Heizen der Wasserverdampfungeschale (201) aufrechterhalten wird, bis ein Anstieg (Atr) erfasst ist, der angibt, dass eine Restwassermenge in der Wasserverdampfungsschale (201) vollständig verdampft ist.

11. Dampferzeuger insbesondere für Garofen, der eine Wasserverdampfungssehale (201), einen Heizblock (200), der mit der Wasserverdampfungsschale (201) in thermischen Kontakt steht, und Mittel zum Regulieren einer Versorgung der Wasserverdampfungsschale (201) mit Wasser aufweist, **dadurch gekennzeichnet, dass** die Wasserversorgungsregelungsmittel
Mittel zum Erfassen (203) eines Anstiegs (At) einer Temperatur (TB) Im Heizblock (200), und
Mittel zum Steuern (40, 23) einer Versorgung der Wasserverdampfungsschale (201) mit Wasser, wenn der Anstieg (At) erfasst ist,
aufweisen.

12. Dampferzeuger nach Anspruch 11, **dadurch gekennzeichnet, dass** die Mittel zum Erfassen eines Temperaturanstiegs Mittel (203) zum Anzeigen einer Überschreitung einer ersten Schwellentemperatur (T1) im Heizblock (200) aufweisen.

13. Dampferzeuger nach Anspruch 11 oder 12, **dadurch gekennzeichnet, dass** er zudem Mittel (204) zum Anzeigen einer Überschreitung einer zweiten Schwellentemperatur (T2) im Heizblock (200) aufweist.

14. Dampferzeuger nach den Ansprüchen 12 und 13, **dadurch gekennzeichnet, dass** die Mittel zum Anzeigen einer Überschreitung einer ersten Schwellentemperatur (T1) und die Mittel zum Anzeigen einer Überschreitung einer zweiten Schwellentemperatur (T2) jeweils einen Temperatursensor (203) und einen Temperaturbegrenzer (204) aufweisen.

15. Dampferzeuger nach einem der Ansprüche 11 bis 14, **dadurch gekennzeichnet, dass** die Mittel zum Steuern der Wasserversorgung einen Steuerkreis (40) und ein Elektroventil (23) aufweisen, wobei der Steuerkreis (40) ein Öffnen des Elektroventils (23) während einer vorgegebenen Dauer (D0) steuert, wenn er aus den Mitteln zum Erfassen eines Temperaturanstiegs (203) eine Information erhält, die ein Erfassen des Anstiegs (At) angibt.

16. Dampferzeuger nach Anspruch 14, **dadurch gekennzeichnet, dass** der Temperatursensor (203) und der Temperaturbegrenzer (204) am unteren Teil des Materialblocks angebracht sind, der mit dem Materialblock in thermischen Kontakt steht.

17. Dampfgarofen, **dadurch gekennzeichnet, dass** er einen Dampferzeuger (2, 4) nach einem der Ansprüche 11 bis 16 aufweist.

18. Dampfgarofen nach Anspruch 17, **dadurch gekennzeichnet, dass** er
eine Temperatursonde (30) zum Messen einer Raumtemperatur (TR) innerhalb eines Garraums (3) des Ofens (1) und
einen Steuerkreis (4, 41) aufweist, um die Raumtemperatur (TR) zu regeln, indem der Heizblock (200) in Abhängigkeit von einer durch die Temperatursonde (30) gelieferten Information und einer Solltemperatur (CS) gesteuert wird.
